(19) Europäisches Patentamt
European Patent Office
Office européen des brevets

(11) Publication number: **0 441 048 B1**

# (12) EUROPEAN PATENT SPECIFICATION

(45) Date of publication of patent specification: **26.10.94** (51) Int. Cl.⁵: **A61C 7/16**

(21) Application number: **90313804.8**

(22) Date of filing: **18.12.90**

(54) **Orthodontic bracket and method of manufacture.**

(30) Priority: **07.02.90 US 476355**

(43) Date of publication of application:
**14.08.91 Bulletin 91/33**

(45) Publication of the grant of the patent:
**26.10.94 Bulletin 94/43**

(84) Designated Contracting States:
**AT CH DE ES FR GB IT LI SE**

(56) References cited:
**EP-A- 0 099 741      EP-A- 0 290 247
EP-A- 0 360 431      US-A- 4 010 545
US-A- 4 204 325      US-A- 4 219 617
US-A- 4 460 336      US-A- 4 752 221**

(73) Proprietor: **ORMCO CORPORATION
1332 South Lone Hill Avenue
Glendora California 91740 (US)**

(72) Inventor: **Wong, Raymond Fones
1616 Chernus Lane
Chino, California 91709 (US)**
Inventor: **Kidd, Patrick David
1629 Yorkshire Court
San Dimas, California 91773 (US)**
Inventor: **Farzin-Nia, Farrokh
141 West Fairview Blvd.
Inglewood, California 90302 (US)**

(74) Representative: **Ackroyd, Robert et al
W.P. THOMPSON & CO.
Eastcheap House
Central Approach
Letchworth, Hertfordshire SG6 3DS (GB)**

## Description

The present invention relates to orthodontic brackets and to methods of making such brackets.

Orthodontic brackets have generally been made of metal and are typically bonded directly to the teeth of a patient. It has always been important to provide a good bonding between the orthodontic bracket and the tooth. Over the years many improvements have been made to metal brackets and the adhesive used to bond the metal bracket to the teeth. As a result, the bonding of typical prior art metal brackets to the teeth has reached generally acceptable values. Aesthetic brackets have recently become popular. Typically these brackets are made of a ceramic material which is much more difficult to secure directly to the teeth. In order to overcome the difficulty of obtaining a good bond with a bracket made of a single crystal alumina, a method of applying such brackets has been suggested in US-A-4681538. However, such a method requires special handling and care to obtain acceptable bonding strength. The provision of undercuts within the base of the bracket has also been suggested. While the provision of such undercuts in the base has provided improved bonding strength, it does not provide the same strength as typical prior art metal brackets. In addition, certain adhesives have been found to detract from the transparent or translucent characteristic of the new aesthetic brackets.

EP-A-0290247 describes a single crystal alumina bracket having on its tooth contact surface alumina particles of 0.03 to 1 μm in size. The particles have a texturing effect and are attached by a combining brazing/sintering operation.

EP-A-0360431 (which is to be considered under Art 54(3) EPC for novelty purposes only) describes a single crystal alumina bracket having diffusion-bonded to its tooth contact surface a substantially monolayer of hollow zirconium oxide particles. EP-A-0360431 was not published until 28 March 1990.

It is an object of the invention to provide an improved orthodontic bracket and a method of making the same wherein improved bonding strength can be obtained without detracting from the aesthetic qualities of the bracket.

According to the present invention there is provided an orthodontic bracket having a base portion of alumina material for attachment to a tooth, the base portion having a tooth contact surface to which particles are bonded, characterised in that the particles have a substantially uniform size in the range 5 to 200 microns and are diffusion bonded to the base portion in a substantially monolayer, and in that the base portion is made out of a polycrystalline alumina material.

The invention also provides a method of applying a substantially monolayer of particles to the tooth contact surface of an orthodontic bracket, comprising the steps of:

(a) applying a layer of an adhesive to the contact surface of an orthodontic bracket made of a polycrystalline alumina material, the adhesive comprising an organic binder, an activator and a surfactant;

(b) applying a monolayer of particles of substantially uniform size in the range of 5 to 200 microns to the tooth contact surface; and

(c) subjecting the bracket to heat so as to diffusion bond the particles to the tooth contact surface.

Preferred features of the invention are given in the sub-claims.

In order that the invention may be fully understood, certain preferred embodiments will now be described by way of example and with reference to the accompanying drawings, in which:

Figure 1 is a top perspective view of an orthodontic bracket made in accordance with the invention;

Figure 2 is a bottom perspective view of the orthodontic bracket of Figure 1;

Figure 3 is a greatly enlarged partial front elevational view of the bonding base of the bracket of Figure 1;

Figure 4 is a greatly enlarged perspective view of the bonding base of the bracket of Figure 1; and

Figure 5 is a bottom perspective view of another embodiment of a bracket made in accordance with the present invention.

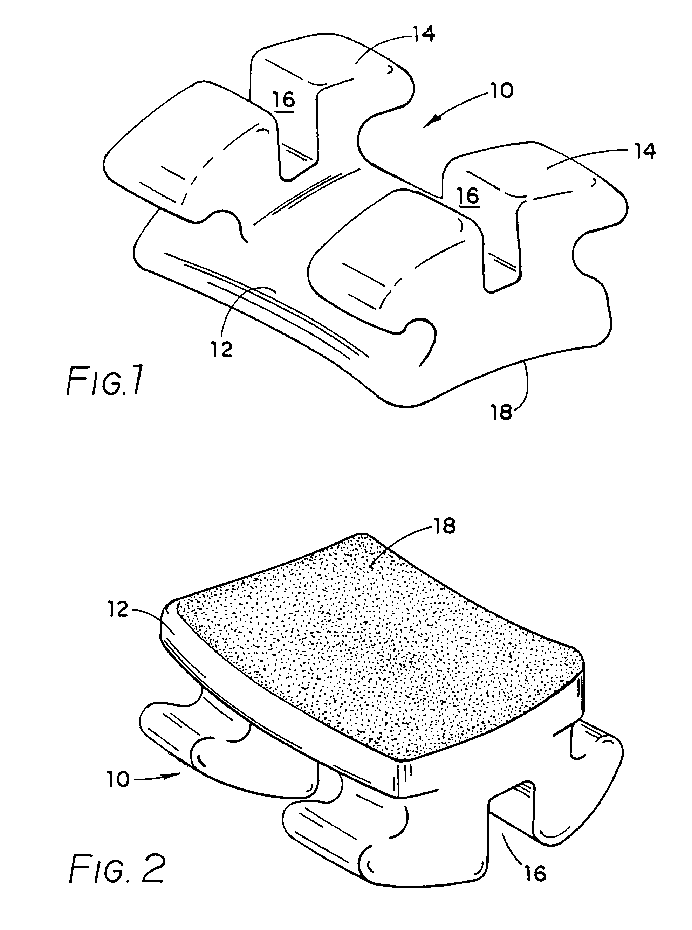

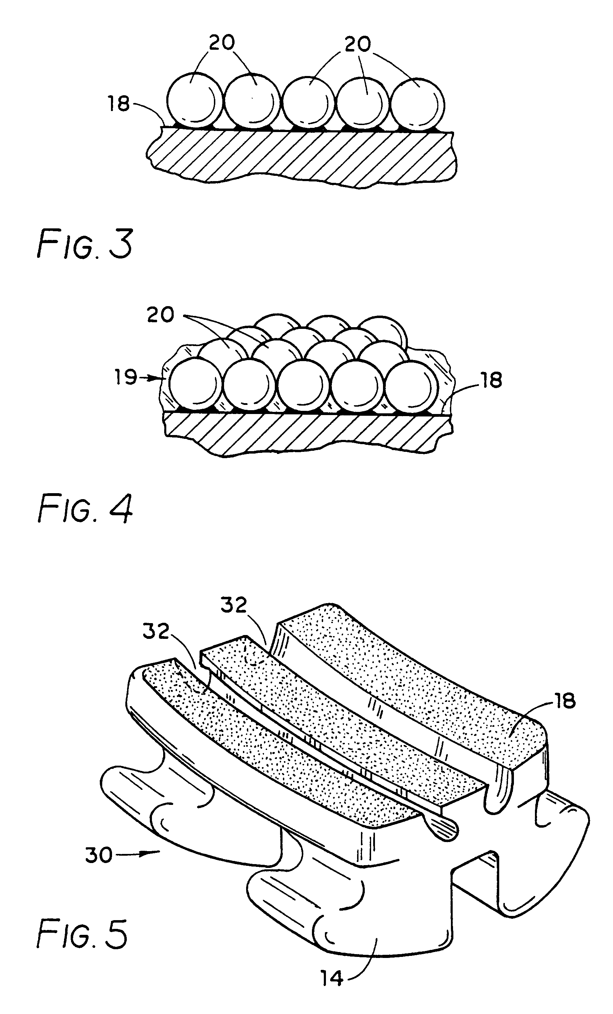

Referring to Figures 1 to 4, there is illustrated an orthodontic bracket 10 for attachment directly to a tooth of a patient. The orthodontic bracket comprises a base portion 12 and a pair of tie-wings 14 which extend from the base portion 12. Tie-wings 14 are each provided with an elongate slot 16 for receiving an orthodontic archwire (not shown). Preferably, the orthodontic bracket is made of ceramic material that is transparent or translucent. In the particular embodiment illustrated the orthodontic bracket 10 is made of a single crystal alumina material. The base 12 has a tooth contact surface 18 for placement against the surface of a tooth of a patient. Surface 18 is provided with a substantially monolayer 19 of individual particles 20 (as can best be seen in Figures 3 and 4) of substantially uniform size secured thereto and having a size in the range of 5 microns to 200 microns. Preferably the particles 20 are substantially spherical in shape as illustrated. In the preferred embodiment illustrated, the particles 20 comprise substantially spherical hollow balls made of zirconium oxide. An example of such may be purchased from

2

Metco under the tradename AE-7078. The particles 20 forming monolayer 19 are of substantially uniform size so that the small particles do not completely fill the voids that exist between adjacent particles 20. Preferably, the size variation of particles 20 in layer 19 is such that the smaller particles 20 are not less than about 75% of the size of the larger particles 20, most preferably not less than about 85%. If the size variation is too great, it will cause the particles to be too closely packed and thus detract from the aesthetic qualities of the bracket. In the particular embodiment illustrated, the size of particles 20 for layer 19 is in the range of 31 to 53 microns, and is preferably in the range of about 37 to 44 microns.

In the particular embodiment illustrated in Figures 1 to 4, the surface 18 of base 12 is substantially continuous. However, the present invention is not so limited. Referring to Figure 5, there is illustrated a modified bracket 30 made in accordance with the present invention. The bracket 30 is substantially identical to bracket 10 of Figures 1 to 4, except that grooves 32 are provided in the surface 18 which may be present in certain brackets for improving adhesion.

While irregular shaped particles may be used to obtain better bonding, they do not provide as aesthetically pleasing an appearance when used on aesthetic brackets, for example brackets made from crystalline alumina.

As previously stated, particles 20 are secured to the contact surface 18 so that they will be permanently attached thereto. In the particular embodiment illustrated the particles 20 are diffusion bonded (welded) to the contact surface 18. The following Table illustrates the improved bond strengths obtained with an orthodontic bracket made of single crystalline alumina having particles 20 applied to surface 18 in comparison with a single crystalline alumina bracket without particles 20 and to a standard orthodontic metal bracket. The prior art single crystalline aluminium brackets were tested with and without grooves provided in surface 18. The crystalline alumina brackets with grooves were similar to that illustrated in Figure 5 and the crystalline alumina brackets without grooves were similar to that illustrated in Figures 1 to 4. The metal bracket and many prior art single crystal alumina grooved brackets were bonded to the tooth using typical prior art adhesives. In the present instance, a two-part dimethacrylate adhesive as sold by Ormco under the tradename Challenge was used. A light cure adhesive sold by Scientific Pharmaceuticals was used to bond the crystalline aluminium brackets to the teeth.

| | Standard Metal Bracket | Prior Art Single Crystal Alumina Bracket | | Single Crystal Alumina Bracket with a monolayer of zirconium oxide particles | |
| --- | --- | --- | --- | --- | --- |
| | | with groove | without groove | with groove | without groove |
| Bond Strength | $150 kg/cm^2$ | $75 kg/cm^2$ | $67 kg/cm^2$ | $180 kg/cm^2$ | $207 kg/cm^2$ |

As can be seen from the foregoing Table, the standard metal bracket had a bond strength of 150 $kg/cm^2$ and the orthodontic bracket having grooves in the base made of single crystal alumina of the prior art had a bond strength of 75 $kg/cm^2$. An orthodontic bracket having grooves in the base made of single crystal alumina with a monolayer of zirconium oxide particles had a bond strength of 180 $kg/cm^2$. It can be seen that the single crystal alumina bracket without grooves in the base, but having a monolayer of zirconium oxide particles, also provided improved results over the typical prior art metal bracket, thus avoiding the necessity of providing grooves to improve bond strength. The bond strengths of brackets having a monolayer of zirconium oxide as compared to other prior art single crystal alumina bracket and typical metal brackets were substantially improved.

It is important that the particles 20 are securely adhered to the surface 18 of the bracket 10. The following procedure has been found to be quite effective in obtaining a substantially monolayer 19 of particles 20 made of zirconium oxide having a size range from about 37 to 44 microns diffusion bonded to the contact surface 18 of bracket 10 made of single crystal alumina. First, the bracket 10 is inverted so that the contact surface 18 faces upwards. Then, an adhesive is applied to the contact surface 18. This adhesive has a general consistency such that it can be brushed or sprayed on. The adhesive comprises a mixture of an organic binder, an activator and a surfactant. For the purpose of the present invention, an activator is a material used to activate (lower the activation energy) required for diffusion bonding below the melting point of the particles 20 and bracket 10. The organic binder and activator are mixed together, along with a sufficient amount of surfactant so as to permit mixing thereof. In the particular formulation, the organic binder comprised about 72.3% by weight of the mixture, the activator comprised about 24.1% by weight and the surfactant comprised about 3.6% by weight. It is important that a proper mix is obtained so as to provide a substantially uniform mixture wherein the binder and activator are in suspension. Also, it is important that not too much activator is used as this can cause wicking during heating which will result in deformation of the particles and filling of the voids therebetween. The organic binder in the particular embodiment illustrated was purchased from Cotronics, of Brooklyn, NY; the activator is sold under the tradename CERAMCOAT 512-T by Aremco of Ossining, NY and the surfactant used was purchased from ICI under the trade name SPAN 85. The adhesive mixture is applied to the contact surface 18 either by brushing or spraying. Preferably, the film thickness is between 0.025 to 0.125 mm (0.001 and 0.005 inches). The adhesive mixture is allowed to dry at room temperature for approximately 1 to 5 minutes. The adhesive after drying is still tacky. Thereafter, particles 20 are either sprinkled on the contact surface 18 or the bracket 10 is turned over and the contact surface 18 is tamped into a pile of particles 20 so that a dense monolayer 19 of particles is achieved. The tacky organic binder allows the spheres to be placed and held in position on the contact surface 18. Thereafter, the bracket is placed in a furnace and preheated to about 120°C in air and then the furnace is heated to approximately 600°C. Typically, the organic binder will burn off at approximately 600°C. Preferably, the temperature within the furnace is increased at a substantially constant ramp function so as not to disturb the location of the particles 20. Preferably, the rate is no greater than 15°C/min. The typical time frame to heat the particles to 600°C from ambient is approximately 30 to 60 minutes. Thereafter, the orthodontic bracket is heated to a second, higher temperature below the melting temperature of the bracket. In the particular embodiment illustrated the orthodontic bracket 10, which is made of a single crystal alumina, has a melting temperature in the range of 2050 to 2100°C. The temperature of the furnace is increased to approximately 1600°C. It is important that the furnace temperature is not too high, as this can cause deformation of the particles, filling the voids therebetween, and that the temperature is not too low, as this can result in insufficient bonding of the particles 20 to the surface 18. A suitable range can easily be obtained simply by taking several samples until acceptable values are obtained. The activator used in the adhesive mixture causes the particles 20 to be diffusion bonded ("welded") to the surface 18 at the contact points at a temperature substantially below its melting point. The orthodontic bracket is maintained at this temperature for a sufficient time period to allow diffusion bonding, typically for about 30 to 60 minutes. Thereafter the bracket is cooled and removed from the furnace.

It has been found that this procedure provides a very high degree of bonding between the particles 20 and the surface 18 of orthodontic bracket 10 without any substantial distortion to the particles 10. Preferably, the particles 20 are made of a material having a coefficient of expansion substantially the same as that of the orthodontic bracket.

An appropriate orthodontic adhesive is then applied to surface 18 and the bracket 10 is secured to the tooth as is customarily done in the prior art. A suitable adhesive that can be used is sold by Ormco under the tradename Challenge. However, many other suitable adhesives may be used. Because of the improved bonding strengths obtained through the use of a monolayer of zirconium oxide particles, a wider variety of adhesive will be available for the orthodontist.

It is to be understood that different combinations of materials may be used for the bracket 10 and/or particles 20 and that certain modifications with respect to manufacturing brackets may be desirable or necessary. In the manufacture of an orthodontic bracket made of polycrystalline alumina material (i.e. such as may be purchased from General Electric Company) having hollow zirconium oxide particles bonded to the contact surface 18, suitable zirconium oxide particles may be purchased from Metco under the tradename AE-7078, having a size range from about 37 to 44 microns as previously discussed. Certain modifications to the manufacture of the bracket may be desirable for aesthetic reasons. The particles 20 would be placed on the contact surface 18 of the bracket 10 in the same manner as previously discussed with regard to the single crystalline alumina bracket. After the particles have been placed on the base, it would be placed in a furnace having an oxygen-containing environment, for example air, and heated to a temperature of approximately 650°C for approximately 1 hour to burn off any organic binders. As with the single crystalline alumina bracket, this temperature may vary in accordance with the temperature required to burn off the specific organic binder. After this has been done, the bracket is allowed to cool and is then placed in a second furnace having a hydrogen environment and is then heated to a temperature of approximately 1800°C. The bracket is maintained at this temperature for approximately 1 hour in order to diffusion bond the particles 20 thereto. Since polycrystalline alumina becomes opaque in an air environment at temperatures necessary for diffusion bonding to occur, it is necessary to place the bracket in a furnace having a hydrogen environment. Preferably, the furnace is lined with tungsten or a high purity alumina to minimise any potential discolouration of the polycrystalline alumina bracket. An appropriate furnace may be purchased from CM Furnaces, Inc. of Bloomfield, New Jersey. After the particles 20 have been properly diffusion bonded to the contact surface 18, the bracket is allowed to cool, after which it is removed from the furnace. It has been found that certain impurities in the zirconium oxide particles result in a slight discolouration of the particles during the diffusion bonding process. In order to restore the clarity to the balls, the orthodontic bracket 10 is subjected to a third heat treatment process wherein the orthodontic bracket is placed in a furnace having an oxygen-containing environment, for example air, and is heated to a temperature of approximately 650°C to oxidise any impurities that may be present and thus restoring the particles 20 to a high degree of clarity. Thereafter, the brackets are removed from the furnace and allowed to cool. The brackets are then secured to the teeth of the patient by using normal bonding techniques presently available, i.e. by the placement of an appropriate adhesive between the tooth contact surface of the bracket and the tooth.

## Claims

1. An orthodontic bracket having a base portion (12) of alumina material for attachment to a tooth, the base portion having a tooth contact surface (18) to which particles (20) are bonded, characterised in that the particles have a substantially uniform size in the range 5 to 200 microns and are diffusion bonded to the base portion in a substantially monolayer (19), and in that the base portion is made out of a polycrystalline alumina material.

2. An orthodontic bracket according to claim 1, in which the particles (20) are substantially spherical in shape.

3. An orthodontic bracket according to claim 1 or 2, in which the particles (20) are hollow.

4. An orthodontic bracket according to any preceding claim, in which the particle size is in the range of 31 to 53 microns.

5. An orthodontic bracket according to claim 4, in which the particle size is in the range of 37 to 44 microns.

6. An orthodontic bracket according to any preceding claim, in which the coefficient of expansion of the particles (20) is substantially the same as the coefficient of expansion of the base portion (12).

7. An orthodontic bracket according to any preceding claim, in which substantially all of the particles (20) are diffusion bonded to the tooth contact surface (18).

8. An orthodontic bracket according to any preceding claim, in which the particles are made of zirconium oxide.

9. A method of applying a substantially monolayer of particles (20) to the tooth contact surface (18) of an orthodontic bracket, comprising the steps of:
   (a) applying a layer of an adhesive to the contact surface (18) of an orthodontic bracket made of a polycrystalline alumina material, the adhesive comprising an organic binder, an activator and a surfactant;
   (b) applying a monolayer (19) of particles (20) of substantially uniform size in the range of 5 to 200 microns to the tooth contact surface; and
   (c) subjecting the bracket to heat so as to diffusion bond the particles (20) to the tooth contact surface.

EP 0 441 048 B1

10. A method according to claim 9, in which, in step (c), the bracket is first subjected to a first temperature sufficient to burn out the organic binder and then is subjected to a second, higher temperature at which the particles (20) are diffusion bonded to the tooth contact surface (18).

11. A method according to claim 10, in which the first temperature is approximately 650°C and the bracket is heated in an oxygen-containing environment.

12. A method according to claim 10 or 11, in which the second, higher temperature is approximately 1800°C and the bracket at this temperature is placed in a hydrogen environment.

13. A method according to any of claims 9 to 12, in which, after step (c), the bracket is subjected to a further heat treatment in an oxidising atmosphere so as to oxidise any impurities or reduced oxides that may be present in the particles.

14. A method according to claim 13, in which the further heat treatment is conducted at a temperature of approximately 650°C in an oxygen-containing environment.

15. A method according to any of claims 9 to 14, in which the organic binder of the adhesive is substantially tacky at room temperature.

16. A method according to any of claims 9 to 15, in which the particles are made of zirconium oxide.

**Patentansprüche**

1. Orthodontische Klammer mit einem aus Aluminiumoxid bestehenden Basisteil (12) zur Befestigung an einem Zahn, wobei das Basisteil eine Zahnkontaktoberfläche (18) aufweist, in die Partikel (20) unlösbar eingebunden sind, **dadurch gekennzeichnet,** daß die Partikel eine im wesentlichen gleichförmige Größe im Bereich von 5 bis 200 Mikrometer besitzen und in den Basisteil in einer im wesentlichen monomolekularen Schicht diffusionseingebunden sind, und wobei das Basisteil aus einem polykristallinen Aluminiumoxid-Material besteht.

2. Orthodontische Klammer nach Anspruch 1, bei der die Partikel (20) eine im wesentlichen kugelartige Form besitzen.

3. Orthodontische Klammer nach Anspruch 1 oder 2, bei der die Partikel (20) hohl sind.

4. Orthodontische Klammer nach einem der vorhergehenden Ansprüche, bei der die Partikelgröße im Bereich zwischen 31 und 53 Mikrometern liegt.

5. Orthodontische Klammer nach Anspruch 4, bei der die Partikelgröße im Bereich zwischen 37 und 44 Mikrometern liegt.

6. Orthodontische Klammer nach einem der vorhergehenden Ansprüche, bei der der Ausdehnungskoeffizient der Partikel (20) im wesentlichen gleich dem Ausdehnungskoeffizienten des Basisteils (12) ist.

7. Orthodontische Klammer nach einem der vorhergehenden Ansprüche, bei der im wesentlichen alle Partikel (20) in die Zahnkontaktoberfläche (18) diffusionseingebunden sind.

8. Orthodontische Klammer nach einem der vorhergehenden Ansprüche, bei der die Partikel aus Zirkonoxid bestehen.

9. Verfahren zum Aufbringen einer im wesentlichen monomolekularen Schicht von Partikeln (20) auf die Zahnkontaktoberfläche (18) einer orthodontischen Klammer, mit den nachstehenden Verfahrensschritten:

(a) Aufbringen einer Bindemittel-Schicht auf die Kontaktoberfläche (18) einer aus einem polykristallinen Aluminiumoxid-Material bestehenden orthodontischen Klammer, wobei die Bindemittel-Schicht ein organisches Bindemittel, einen Aktivator und einen oberflächenaktiven Stoff enthält;

(b) Auftragen einer monomolekularen Schicht (19) von Partikeln (20) von im wesentlichen gleichförmiger Größe im Bereich von 5 bis 200 Mikrometern auf die Zahnkontaktoberfläche und
(c) Erhitzen der Klammer soweit, daß die Partikel (20) mit der Zahnkontaktoberfläche eine Diffusionsverbindung eingehen.

10. Verfahren nach Anspruch 9, bei dem im Verfahrensschritt (c) die Klammer zunächst einer ersten Wärmebehandlung zum Ausglühen des organischen Bindemittels und sodann einer zweiten Wärmebehandlung bei höherer Temperatur unterworfen wird, bei der die Partikel (20) in die Zahnkontaktoberfläche (18) diffusionseingebunden werden.

11. Verfahren nach Anspruch 10, bei dem die erste Wärmebehandlungstemperatur annähernd 650°C beträgt und die Klammer in einer sauerstoffhaltigen Umgebung erhitzt wird.

12. Verfahren nach Anspruch 10 oder 11, bei dem die zweite, höhere Wärmebehandlungstemperatur annähernd 1800°C beträgt und die Klammer sich bei dieser Temperatur in einer Wasserstoff-Umgebung befindet.

13. Verfahren nach einem der Ansprüche 9 bis 12, bei dem nach dem Verfahrensschritt (c) die Klammer einer weiteren Wärmebehandlung in oxidierender Atmosphäre unterworfen wird, um etwaige Verunreinigungen oder reduzierte Oxide, die bei den Partikeln vorhanden sein könnten, oxidieren zu können.

14. Verfahren nach Anspruch 13, bei dem die weitere Wärmebehandlung bei einer Temperatur von annähernd 650°C in sauerstoffhaltiger Umgebung durchgeführt wird.

15. Verfahren nach einem der Ansprüche 9 bis 14, bei dem das organische Bindemittel der Bindemittelschicht bereits bei Raumtemperatur im wesentlichen klebrig ist.

16. Verfahren nach einem der Ansprüche 9 bis 15, bei dem die Partikel aus Zirkonoxid bestehen.

**Revendications**

1. Attache orthodontique comprenant une partie de base (12) en matière de type alumine pour fixation à une dent, la partie de base présentant une surface de contact de dent (18) à laquelle des particules (20) sont liées, caractérisée en ce que les particules ont une dimension sensiblement uniforme dans la plage de 5 à 200 $\mu$m et elles sont liées par diffusion à la partie de base sensiblement en une monocouche (19), et en ce que la partie de base est fabriquée en une matière de type alumine polycristalline.

2. Attache orthodontique suivant la revendication 1, dans laquelle les particules (20) sont de forme sensiblement sphérique.

3. Attache orthodontique suivant la revendication 1 ou 2, dans lequel les particules (20) sont creuses.

4. Attache orthodontique suivant une quelconque des revendications précédentes, dans laquelle la dimension des particules est comprise entre 31 et 53 $\mu$m.

5. Attache orthodontique suivant la revendication 4, dans laquelle la dimension des particules est comprise entre 37 et 44 $\mu$m.

6. Attache orthodontique suivant une quelconque des revendications précédentes, dans laquelle le coefficient de dilatation des particules (20) est sensiblement égal au coefficient de dilatation de la partie de base (12).

7. Attache orthodontique suivant une quelconque des revendications précédentes, dans laquelle sensiblement toutes les particules (20) sont liées par diffusion à la surface de contact de dent (18).

8. Attache orthodontique suivant une quelconque des revendications précédentes, dans laquelle les particules sont en oxyde de zirconium.

9. Méthode d'application sensiblement d'une monocouche de particules (20) à la surface de contact de dent (18) d'une attache orthodontique, comprenant les étapes de :

(a) application d'une couche d'un adhésif à la surface de contact (18) d'une attache orthodontique en matière de type alumine polycristalline, l'adhésif comprenant un liant organique, un agent d'activation et un agent tensioactif ;

(b) application d'une monocouche (19) de particules (20), de dimension sensiblement uniforme dans la plage de 5 à 200$\mu$m, à la surface de contact de dent ; et

(c) exposition de l'attache à la chaleur de façon à lier par diffusion les particules (20) à la surface de contact de dent.

10. Méthode suivant la revendication 9, dans laquelle, à l'étape (c), on soumet d'abord l'attache à une première température suffisante pour brûler complètement le liant organique, puis on la soumet à une deuxième température, plus élevée, à laquelle les particules (20) sont liées par diffusion à la surface de contact de dent (18).

11. Méthode suivant la revendication 10, dans laquelle la première température est de 650°C environ et l'attache est chauffée dans un environnement contenant de l'oxygène.

12. Méthode suivant la revendication 10 ou 11, dans laquelle la deuxième température, plus élevée, est de 1800°C environ et l'attache à cette température est placée dans un environnement d'hydrogène.

13. Méthode suivant une quelconque des revendications 9 à 12, dans laquelle, après l'étape (c), l'attache est soumise à un traitement thermique supplémentaire dans une atmosphère oxydante afin d'oxyder les impuretés ou les oxydes réduits qui peuvent exister dans les particules.

14. Méthode suivant la revendication 13, dans laquelle le traitement thermique supplémentaire est effectué à une température de 650°C environ dans un environnement contenant de l'oxygène.

15. Méthode suivant une quelconque des revendications 9 à 14, dans laquelle le liant organique de l'adhésif est sensiblement poisseux à température ambiante.

16. Méthode suivant une quelconque des revendications 9 à 15, dans laquelle les particules sont en oxyde de zirconium.

FIG.1

FIG. 2

FIG. 3

FIG. 4

FIG. 5